# EUROPÄISCHE PATENTSCHRIFT

(11) **EP 0 732 279 B1**
(45) Veröffentlichungstag und Bekanntmachung des Hinweises auf die Patenterteilung: **14.10.1998**
(21) Anmeldenummer: 95103938.7
(22) Anmeldetag: 17.03.1995
(51) Int. Cl.: B65G 47/51, B65G 1/127, B65G 35/06

(54) **Speicher für Warenstücke**
System for storing articles
Système de stockage d'articles

(43) Veröffentlichungstag der Anmeldung: 18.09.1996
(73) Patentinhaber: Klöckner Hänsel GmbH, 30163 Hannover (DE)
(72) Erfinder: Koop, Franz Dr., D-30171 Hannover (DE)
(74) Vertreter: Rehberg, Elmar, Dipl.-Ing.

(56) Entgegenhaltungen:
- EP-A- 0 534 902
- EP-A- 0 694 196
- WO-A-95/29859
- FR-A- 2 195 560
- US-A- 1 772 047
- US-A- 1 837 605

## Beschreibung

Die Erfindung bezieht sich auf einen Speicher für Warenstücke, insbesondere reihenweise geförderte Süßwarenstücke, mit den im Oberbegriff des Anspruches 1 angegebenen Merkmalen. Bei der Herstellung und Verpackung von insbesondere Süßwarenstücken, beispielsweise Schokoladetafeln oder -riegeln entsteht das Problem, daß die Herstellmaschine aus produktionstechnischen Gründen kontinuierlich durchlaufend betrieben wird, während die Verpackungsmaschine oder -anlage zur Überbrückung von Zwischenzeiten stillgesetzt wird. Solche Zwischenzeiten können durch Arbeitspausen für das Bedienungspersonal der Verpackungsanlage vorgegeben sein oder auch durch einen Defekt, z. B. Rollenwechsel, an einer oder mehreren Verpackungsmaschinen einer Verpackungsanlage verursacht sein. In all diesen Zwischenzeiten müssen die von der Herstellungsmaschine weiter angelieferten Warenstücke in einen Speicher überführt werden. Außerhalb der Zwischenzeiten soll dann der Speicher auch wieder entleert werden können, indem die unverpackten Warenstücke der Verpackungsanlage zugeführt werden.

Die FR-A-2 195 560 zeigt einen Speicher der eingangs beschriebenen Art, nämlich mit einer Eingabestation und einer Ausgabestation, die unabhängig voneinander betätigbar sind. Zwischen diesen beiden Stationen ist eine Speicherstrecke für die mit warenstücken beladenen Gondeln und eine Förder- und Speicherstrecke für die leeren Gondeln vorgesehen. Im Bereich der Eingabestation ist ein Eingabeelevator vorgesehen, der über zwei Umlenkrollen geführt ist und ausschließlich die Aufgabe hat, die Gondeln schrittweise abzusenken, so daß sie mit Warenstücken beladen werden können. Die Gondeln werden von Hand in die Speicherstrecke eingeschoben. In der Speicherstrecke werden die Gondeln von einer Fördereinrichtung erfasst, die die Gondeln unter Staubildung vor die Ausgabestelle fördern. Der Ausgabeelevator ist entsprechend dem Eingabeelevator ausgebildet.

Ein ähnlicher Speicher, jedoch ohne Gondeln, ist aus der DE 41 35 241 C1 bekannt. Der Speicher besitzt eine Eingabestation und eine Ausgabestation, die unabhängig voneinander betätigbar sind. Zwischen der Eingabestation und der Ausgabestation befindet sich eine Speicherstrecke mit variabler Aufnahmekapazität. Es sind Trägerplatten zur Aufnahme der Warenstücke und eine Fördereinrichtung zum Transportieren der Trägerplatten in etwa kreisartiger Bewegung durch den Speicher vorgesehen. Die Fördereinrichtung besteht aus vielen einzelnen Elementen und Einzelantrieben. So ist im Bereich der Eingabestation ein Eingabeelevator und im Bereich der Ausgabestation ein Ausgabeelevator zum Bilden bzw. Abarbeiten von stapeln vorgesehen. Die Speicherstrecke zwischen Eingabeelevator und Ausgabeelevator ist zum gemeinsamen Fördern der Stapel unter Staubildung vor der Ausgabestation des Ausgabeelevators ausgebildet. Um die Trägerplatten mit den daraufliegenden Warenstücken von dem Eingabe elevator in die Speicherstrecke zu überführen, ist ein gesonderter Eingabeförderer mit eigenem Antrieb vorgesehen. Entsprechendes gilt für den Übergang zwischen Speicherstrecke und Ausgabeelevator; dort ist ein Ausgabeförderer mit gesondertem Antrieb erforderlich. Die Anzahl der einzelnen Elemente der Fördereinrichtung und die Anzahl der einzelnen Antriebe ist bei diesem bekannten Speicher relativ hoch. Die Betätigung des Eingabeförderers und des Ausgabeförderers können je nach Ausbildung dieser Elemente die Leistung des Speichers begrenzen, wobei es erforderlich sein kann, beispielsweise während der Betätigung des Eingabeförderers, den Eingabeelevator anzuhalten. Wenn sich die Förder- bzw. Bewegungsbahnen des Eingabeförderers und des Eingabeelevators kreuzen, kann dies nicht nur für den Vorwärtshub des Eingabeförderers, sondern auch für den Rückwärtshub des Eingabeförderers der Fall sein. Bei dem bekannten Speicher sind die Trägerplatten im Speicher frei beweglich vorgesehen, so daß sie in leerem Zustand unmittelbar aufeinandergestapelt werden können und so besonders wenig Platz beanspruchen. Dies führt vorteilhaft dazu, daß mehr als 50 % des Speichervolumens für die Speicherung von mit Warenstücken besetzten Trägerplatten genutzt werden kann. Auch können aus den Trägerplatten Vollstapel mit unterschiedlicher Anzahl Trägerplatten gebildet werden, um z. B. eine schnelle Ausgabebereitschaft herbeizuführen. Jedoch erfordert dieser bekannte Speicher eine Vielzahl von einzelnen Antriebselementen und Einzelantrieben.

Ein weiterer Speicher ist aus der US-PS 41 68 776 bekannt. Wesentliches Element dieses Speichers ist eine Endloskette, die über Kettenräder geschlungen ist. Ein Teil der Kettenräder ist ortsfest angeordnet, während andere Kettenräder, paarweise zusammengefaßt, vertikal beweglich angeordnet sind. An dem Speicher ist eine Eingabestation und eine davon separate Ausgabestation gebildet, die auch unabhängig voneinander betätigbar sind, d. h. der Speicher kann je nach Bedarf gefüllt und entleert werden. Der Speicher kann also entweder nur befüllt oder nur entleert werden. Weiterhin ist es möglich, während des Befüllens auch zu entleeren, wobei auch durchaus unterschiedliche Geschwindigkeiten angewendet werden können. Der bekannte Speicher besitzt einen relativ großen Totraum, d. h. etwa 50 % seines Volumens dienen nur der reinen Durchförderung der Warenstücke durch den Speicher. Bevor das erste Warenstück in der Abgabestation wieder entnommen werden kann, muß der Speicher etwa bis zur Hälfte seines Raumbedarfs befüllt werden. Nur die restliche Hälfte seines Raumbedarfs bildet eine Speicherstrecke mit variabler Aufnahmekapazität. Wenn es zu den wesentlichen Eigenschaften eines Speichers gerechnet wird, daß auch seine Entnahmemöglichkeit jederzeit gegeben sein soll bzw. in relativ kurzer Zeit herstellbar sein soll, dann ist das Verhältnis von Speicherstrecke mit variabler Aufnahmekapazität zum Verhältnis des nur zur Förderung dienenden Totraums relativ ungünstig. Hierdurch wiederum verursacht baut ein solcher Speicher relativ lang und hoch, wenn seine Speicherstrecke mit variabler Aufnahmekapazität hinreichend groß sein soll oder sein muß. Die endlose Kette ist mit Trägerplatten zur Aufnahme der Warenstücke versehen, und es ist eine Fördereinrichtung zum Transportieren der Trägerplatten an der Kette in etwa kreisartiger Bewegung durch den Speicher vorgesehen, wobei die einzelnen Antriebsräder Bestandteil dieser Fördereinrichtung sind. Durch die kreisbogenartige Umlenkung der Endloskette an den Kettenrädern und das schrittweise bzw. taktweise Weiterschalten der Kette an den verschiedenen Stellen ergeben sich an den Umlenkstellen auf die Warenstücke einwirkende Kräfte, die parallel zur Haupterstreckungsebene der Trägerplatten gerichtet sind. Damit die Warenstücke von den Trägerplatten nicht herabrutschen und herunterfallen, müssen die Trägerplatten entweder eine entsprechende Formgebung aufweisen, oder es müssen sonstige Maßnahmen getroffen sein.

Es versteht sich, daß die im Speicher an den Kettenrädern aufgebrachten Umfangsgeschwindigkeiten begrenzt sind. Dadurch ist auch die Leistung eines solchen Speichers begrenzt. Weiterhin weisen diese Speicher die Besonderheit auf, daß die Warenstücke in der Reihenfolge ihrer Einspeicherung auch wieder entnommen werden können, d. h. das zuerst in den Speicher eingebrachte Warenstück wird auch zuerst wieder entnommen.

Für das Anwendungsgebiet der Speicherung von Süßwarenstücken, insbesondere Schokoladetafeln oder -riegeln ist es bekannt, aufbauend auf der zuvor beschriebenen prinzipiellen Anordnung des Speichers Gondeln zu verwenden, die gelenkig mit der Endloskette verbunden sind. Diese Gondeln weisen übereinander eine gewisse Anzahl von Trägerplatten auf, beispielsweise fünf Trägerplatten, wobei jede Trägerplatte zur Aufnahme einer Reihe von Süßwarenstücken ausgebildet und bestimmt ist. Die Teilung, mit der die Trägerplatten innerhalb einer Gondel angeordnet sind, ist dabei kleiner als der Abstand der untersten Trägerplatten einer ersten Gondel von der obersten Trägerplatte einer nachfolgenden Gondel. Dieser dort größere Unterschied wird als Gondelsprung bezeichnet. Andererseits gestatten es jedoch die Gondeln in einfacher Weise, die Umlenkung der Trägerplatten um die Kettenräder zu ermöglichen, wobei die Trägerplatten immer in horizontal ausgerichteter Position verbleiben. Da nackte, unverpackte Süßwarenstücke auf eben ausgebildete Trägerplatten aufgeschoben werden, ist eine abweichende Formgebung der Trägerplatten nicht möglich. Durch die gelenkige Aufhängung der Gondeln wird einerseits die Umlenkung um die Kettenplatten möglich, und andererseits wird der negative Einfluß der Beschleunigungskräfte beim Weiterschalten der Endloskette gemindert. Nachteilig an solchen Gondeln ist es, daß die Weiterschaltschritte der Endloskette z. B. im Bereich der Eingabestation unterschiedlich groß bemessen sein müssen. Die größere Strecke entspricht dabei dem Gondelsprung, und dieser Gondelsprung legt damit die Leistung des Speichers fest, weil dieser Bewegungsschritt die größte Beanspruchung für die Süßwarenstücke darstellt. Dabei darf kein Süßwarenstück von seiner Tragplatte an der Gondel herabfallen. Zur Überbrückung der Teilung zwischen den Tragplatten einer Gondel steht dann eine gleichgroße Zeitspanne wie bei der Überwindung des Gondelsprungs bereit, so daß hier eine vergleichsweise niedrigere Geschwindigkeit angewendet werden kann.

Nachteilig an solchen mit Gondeln ausgerüsteten Speichern ist weiterhin, daß durch die Art der Umlenkung der Speicher sehr groß baut, obwohl seine Speicherstrecke mit variabler Aufnahmekapazität relativ klein ist. Das Aufschieben der Süßwarenstücke auf die Trägerplatten im Bereich der Eingabestation und das Abschieben von den Trägerplatten im Bereich der Abgabestation beansprucht die Süßwarenstücke entsprechend, da hier Gleitreibung zu überwinden ist. Der Einschiebevorgang muß im übrigen so ausgeführt werden, daß das Süßwarenstück symmetrisch zum Gelenkpunkt der Gondel bzw. einer Vertikalebene durch diesen Gelenkpunkt erfolgt. Dies bedeutet, daß bei wechselnden Formaten von Süßwarenstücken beim Einschieben unterschiedliche Wege zurückgelegt werden müssen und/oder für die jeweiligen Anwendungsfälle in Format und Ausbildung abgestimmte Tragplatten und Gondeln an solchen Speichern Verwendung finden.

Ein weiterer Nachteil besteht darin, daß sämtliche Gondeln des Speichers bei gewissen Betriebszuständen bewegt werden müssen. Dies ist z. B. dann der Fall, wenn ein vollkommen leerer Speicher hinsichtlich seines Totraums, also hinsichtlich seiner Speicherstrecke mit konstanter Aufnahmekapazität befüllt wird.

Weiterhin ist es nachteilig, daß sich bei den bekannten Speichern die an den Gondeln befestigten Trägerplatten nur schwierig reinigen lassen. Während der laufenden Produktion ist dies praktisch überhaupt nicht möglich. Nur, wenn der Speicher und die angeschlossenen Anlagen stillgesetzt werden, ist eine mühsame Reinigung bis zu gewissem Grad möglich.

In der EP 0 684 196 A1 und der WO 95/29859 sind Speicher gezeigt und beschrieben, die als wesentliches Element durchlaufende Endlosketten aufweisen, die sich auch über die Eingabestation und die Ausgabestation hinwegerstrecken, so daß diese Speicher keinen gesonderten Eingebeelevator und keinen gesonderten Ausgabeelevator besitzen.

Der Erfindung liegt die Aufgabe zugrunde, einen Speicher der eingangs beschriebenen Art so weiterzubilden, daß die Anzahl der Einzelantriebe möglichst reduziert wird und dennoch eine akzeptable Leistung erreicht wird.

Erfindungsgemäß wird dies bei dem Speicher der eingangs beschriebenen Art dadurch erreicht, daß der Eingabeelevator und der Ausgabeelevator je ein eine vertikale und zwei horizontale Bewegungskomponenten für die Gondeln bereitstellender und mit Mitnehmern für die Gondeln besetzter Förderer ist, daß jeder Förderer zwei Ketten aufweist, und daß jede Kette jedes Förderers über mindestens vier ortsfeste Umlenkräder in einer zumindest etwa parallel zur Bewegungsrichtung der Gondeln in der Speicherstrecke und der Förder- und Speicherstrecke gebildeten Förderebene umlaufend geführt ist, durch deren Anordnung die Förderebene festgelegt ist.

Die Erfindung geht zunächst von dem Gedanken aus, die je einen Stapel bildenden Trägerplatten an Gondeln zusammenzufassen. Damit vereinfacht sich die Förderung in der Speicherstrecke und in der Förder- und Speicherstrecke. Durch die Ausbildung des Eingabeelevators einerseits und des Ausgabeelevators andererseits als je ein eine vertikale und zwei horizontale Bewegungskomponenten für die Gondeln bereitstellender und mit Mitnehmern für die Gondeln besetzter Förderer und durch die besondere Relativanordnung ihrer Förderebene zu der Bewegungsrichtung der Gondeln in der Speicherstrecke erfüllen diese Förderer eine Mehrfachfunktion. Sie übernehmen im Vergleich zum Stand der Technik einerseits die Aufgabe des Eingabeelevators bzw. Ausgabeelevators und zusätzlich die Funktion des Eingabeförderers und des Ausgabeförderers auf der Eingabeseite und auf der Ausgabeseite. Damit wird auch die Anzahl der Einzelantriebe geringer. Durch die Anordnung der Trägerplatten an den Gondeln wird zwar die Anzahl der Trägerplatten im Stapel festgelegt, jedoch wird dadurch eine Leistungssteigerung möglich, weil die Leistung nur noch von dem Gondelsprung begrenzt ist. Um den Gondelsprung zu überwinden, werden die Warenstücke auf der Gondel bzw. mit den Gondeln in senkrechter Richtung bewegt, also senkrecht zur Längsrichtung der Warenstücke. Der Eingabeförderer und der Ausgabeförderer nach dem Stand der Technik müssen jedoch die Trägerplatten mit den daraufliegenden Warenstücken in einem Arbeitstakt in Längsrichtung der Warenstücke und somit entsprechend der Breite der Trägerplatte fördern, wodurch dort die Leistung begrenzt ist. Auch spielt die Stabilität der Trägerplatten eine gewisse Rolle. Durch die Zusammenfassung der Trägerplatten an Gondeln ergibt sich gleichzeitig vorteilhaft eine Aussteifung der an den Gondeln fixierten Trägerplatten. Für die Änderung der Bewegungsrichtung der Trägerplatten aus der vertikalen Richtung im Bereich des Eingabeelevators in die horizontale Richtung der Speicherstrecke ist durch die Anordnung der Gondeln und der Umlenkräder die Möglichkeit geschaffen, diese Richtungsänderung auf mehrere Takte zu verteilen, so daß dieser Engpaß in der Leistungsbegrenzung beseitigt wird. Die Gondeln lassen sich schließlich im Bereich der Speicherstrecke einfacher fördern als Vollstapel aus Trägerplatten.

Jeder Förderer weist zwei Ketten auf, die mit Mitnehmern besetzt sind und in den Förderebenen rechts und links im Bereich der Eingabestation und der Ausgabestation umlaufen. Zu einem Förderer gehören somit zwei Ketten, deren Mitnehmer so angeordnet sind, daß die Gondeln von zwei Mitnehmern ergriffen werden. Die Förderebenen der Förderer sind weitgehend parallel zu der Förderrichtung in den beiden Speicherstrecken.

Jede Kette jedes Förderers ist über mindestens vier ortsfeste Umlenkräder in einer zumindest etwa parallel zur Bewegungsrichtung der Gondeln in der Speicherstrecke und der Förder- und Speicherstrecke gebildeten Förderebene geführt, durch deren Anordnung die Förderebene festgelegt ist. Die Umlenkräder sind so ausgebildet und plaziert, daß einerseits die Aufgabe der Elevatoren und andererseits die Aufgaben des Ein- und Ausgabeförderers und schließlich noch die Aufgaben der Förderer erfüllt werden, die den Übergang im Bereich der zweiten Speicherstrecke für die leeren Gondeln darstellen.

Das dem Speicher zugekehrte freie Ende eines die Warenstücke heranführenden Förderbandes und/oder eines die Warenstücke aus dem Speicher hinwegführenden Förderers kann zur Überbrückung des Gondelsprungs höhenveränderlich verfahrbar sein. Hierdurch erhöht sich zwar wiederum die Anzahl der Einzelantriebe, jedoch ist es möglich, damit den Gondelsprung zu überwinden und die Warenstücke in kontinuierlich ablaufenden Takten auf die Trägerplatten an den Gondeln aufzuschieben, ohne daß sich der Gondelsprung störend bemerkbar macht. Es ergibt sich sogar die Möglichkeit, die Förderer kontinuierlich anzutreiben und das dem Speicher zugekehrte freie Ende des die Warenstücke heranführenden Förderbandes entsprechend der kontinuierlichen Bewegung des Förderers mitzubewegen und damit die Warenstücke während der Bewegung überzuschieben. Das Förderband und/oder der Förderer können parallel zu ihrer Ausbildung höhenverfahrbar oder um eine dem Speicher abgekehrte Umlenkrolle schwenkbar sein.

Die Trägerplatten können an den Gondeln in einem dem halben Gondelsprung entsprechenden Abstand voneinander angeordnet sein. Damit entspricht der Gondelsprung dem Abstand von einer Trägerplatte zur übernächsten Trägerplatte. Aber auch andere Abmessungen sind möglich.

Die Speicherstrecke für die mit Warenstücken gefüllten Gondeln und eine zwischen Ausgabestation und Eingabestation vorgesehene Speicherstrecke für leere Gondeln sind mit Gleitschienen für die Gondeln ausgestattet, auf denen die Gondeln hängend aufgenommen sind. Damit vereinfacht sich die Handhabung der Trägerplatten an den Gondeln im Bereich der beiden Speicherstrecken.

In der Speicherstrecke für leere Gondeln kann eine Schleuse zum Herausnehmen und Einführen von Gondeln vorgesehen sein. Dies dient insbesondere der Reinigung der Gondeln. Aber auch die Anzahl der Gondeln innerhalb des Speichers kann auf diese Art und Weise erhöht bzw. vermindert werden.

Jeder Förderer weist einen geneigten ansteigenden und abfallenden Bereich der horizontalen Bewegungskomponente zur Aufnahme bzw. Abgabe der Gondeln auf. Mit diesen Bereichen wird der Übergang der Gondeln zu den Gleitschienen an den beiden Speicherstrecken erreicht.

Jede Gondel kann zwei in vertikalem Abstand zueinander angeordnete Rollenpaare aufweisen, zwischen denen ein Aufnahmewinkel für den Eingriff des Mitnehmers angeordnet ist. Das obere Rollenpaar ist oberhalb des Aufnahmewinkels und das untere Rollenpaar unterhalb des Aufnahmewinkels angeordnet. Hierdurch wird es möglich, die Gondeln im Bereich der ersten Speicherstrecke für die vollen Gondeln auf dem oberen Rollenpaar aufzuhängen. In der zweiten Speicherstrecke für leere Gondeln dagegen werden die Gondeln auf den unteren Rollenpaaren aufgehängt.

Die Förderer können mit ihren Förderebenen gegenüber der Bewegungsebene in der Speicherstrecke um das für das Ein- bzw. Ausfahren der Mitnehmer in die Aufnahmewinkel der Gondeln erforderliche Maß schrägstehend angeordnet sein. Damit ergibt sich eine einfache Möglichkeit zwischen dem Zusammenspiel der Mitnehmer, der Rollenpaare, des Aufnahmewinkels und der Gleitschienen.

Die Erfindung wird anhand eines bevorzugten Ausführungsbeispiels weiter beschrieben. Es zeigen:
- Figur 1: einen Vertikalschnitt durch den Speicher während des Betriebes,
- Figur 2: einen Vertikalschnitt durch den Speicher mit gefüllter erster Speicherstrecke während der Ausgabe,
- Figur 3: einen Vertikalschnitt durch den vollkommen leeren Speicher,
- Figur 4: einen Vertikalschnitt durch den Speicher in einer bestimmten Betriebssituation,
- Figur 5: eine Vorderansicht des Speichers, senkrecht zur Zeichenebene der Figur 1,
- Figur 6: eine Draufsicht auf den Speicher in einer ersten Ausführungsform und
- Figur 7: eine Draufsicht auf den Speicher in einer zweiten Ausführungsform.

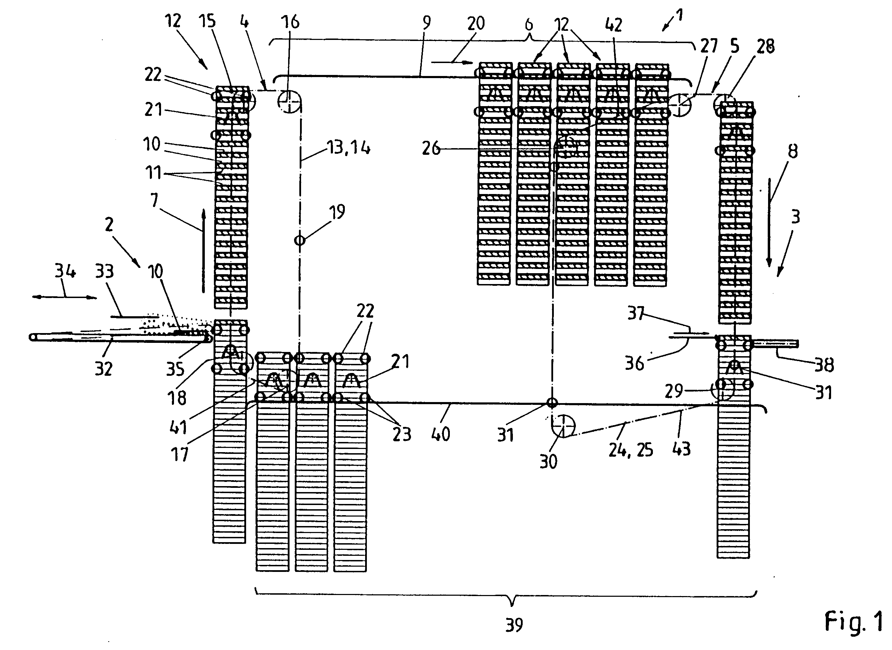

In dem vertikalen Längsschnitt durch den Speicher 1 gemäß Figur 1 sind die für die Erfindung wesentlichen Teile schematisch dargestellt. Es ist eine Eingabestation 2 und eine Ausgabestation 3 gebildet. Im Bereich der Eingabestation 2 ist ein erster Förderer 4 und im Bereich der Ausgabestation ein zweiter Förderer 5 angedeutet. Die Förderer 4 und 5 sind prinzipmäßig gleichartig ausgebildet, wobei der Förderer 4 taktweise fortschreitend nach oben arbeitet, während der der Ausgabe dienende Förderer 5 taktweise nach unten fortschreitend arbeitet. Der Förderer 4 erfüllt jedoch nicht nur die Funktion eines Eingabeelevators, fördert die einzelnen Warenstücke also nicht nur vertikal nach oben, sondern er erbringt auch die Aufgabe eines Eingabeförderers in horizontaler Richtung in eine speicherstrecke 6 hinein. Analoges gilt für den Förderer 5. Dieser führt die Warenstücke in horizontaler Richtung aus der Speicherstrecke 6 heraus, erfüllt also die Aufgaben eines Ausgabeförderers, und erbringt auch die Funktion eines Ausgabeelevators, also die Förderung in vertikaler Richtung abwärts. Die Umlaufrichtung des Förderers 4 ist durch einen Pfeil 7 angegeben. Der Förderer 5 läuft in Richtung eines Pfeiles 8 um. Im Bereich der Speicherstrecke 6 mit variabler Aufnahmekapazität sind horizontale Gleitschienen 9 angeordnet. Der Speicher dient zur Aufnahme von Warenstücken 10, die auf Trägerplatten 11 aufliegen. Die Trägerplatten 11 sind fix oder lösbar an Gondeln 12 angeordnet.

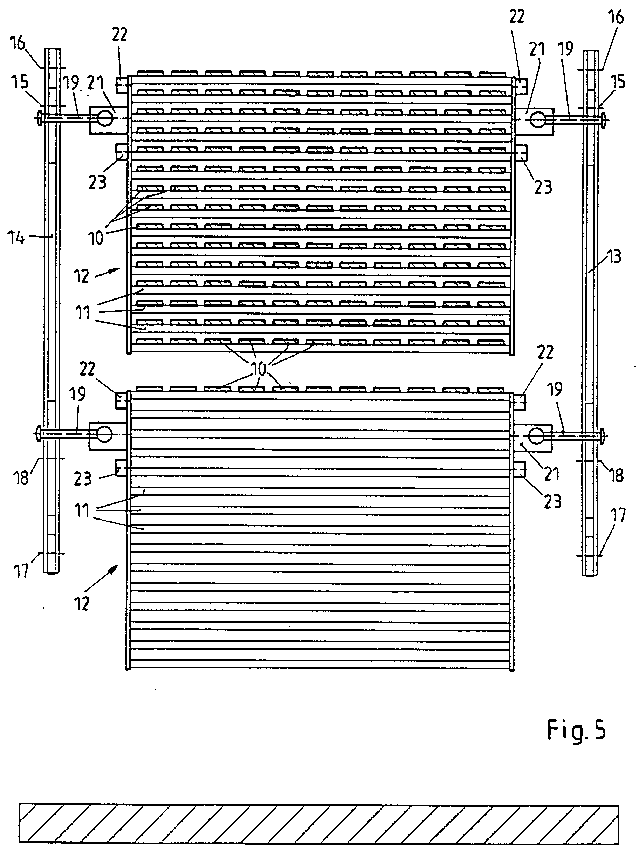

Der Förderer 4 weist zwei Ketten 13 und 14 auf, die rechts und links (Figur 5) im Bereich der Eingabestation 2 vorgesehen sind. Die Ketten 13 und 14 sind je über Umlenkräder 15, 16, 17, 18 geführt und mit Mitnehmern 19 besetzt. Der Förderer 4 spannt mit seiner umlaufenden Kette 13 eine Ebene auf, die parallel zur Zeichenebene der Figur 1 liegt und damit parallel zur Bewegungsrichtung gemäß Pfeil 20 der Gondeln 12 in der Speicherstrecke 6. Das obere Trum der Kette 13 zwischen den Umlenkrädern 15 und 16 verläuft horizontal in Richtung des Pfeiles 20. Das Entsprechende gilt auch für die links angeordnete Kette 14 des Förderers 4. Die Mitnehmer 19 greifen in Aufnahmewinkel 21 ein, die rechts und links an jeder Gondel 12 angeordnet sind. Jede Gondel 12 besitzt darüberhinaus rechts und links zwei Rollenpaare 22 und 23, die mit Abstand zueinander und unter Einschluß der Aufnahmewinkel 21 vorgesehen sind. Das obere Rollenpaar 22 arbeitet im Bereich der Speicherstrecke 6 mit der Gleitschiene 9 zusammen. Die Gondeln 12 sind innerhalb der Speicherstrecke 6 mit Hilfe der beiden Rollenpaare 22 rechts und links auf je einer Gleitschiene 9 geführt und abgestützt.

Auch der Förderer 5 ist ähnlich aufgebaut. Er weist zwei Ketten 24 und 25 auf, die rechts und links des Speichers 1 im Bereich der Ausgabestation 3 vorgesehen sind. Die Kette 24 ist über Umlenkräder 26, 27, 28, 29, 30 geführt. Entsprechendes gilt für die Kette 25. Damit wird durch die um die Umlenkräder 26, 27, 28, 29, 30 umlaufende Kette 24 eine Förderebene aufgespannt, die parallel zur Zeichenebene der Figur 1 verläuft und damit auch parallel zur Bewegungsrichtung der Gondeln 12 in der Speicherstrecke 6 gemäß Pfeil 20. Auch die Kette 25 auf der anderen Seite des Speichers spannt eine solche Förderebene auf. Damit ist erkennbar, daß die wesentlichen Elemente des Förderers 4 und des Förderers 5 in Förderebenen angeordnet sind und umlaufen, die parallel zur Zeichenebene der Figur 1 und damit auch parallel zur Bewegungsrichtung der Gondeln 12 gemäß Pfeil 20 in der Speicherstrecke 6 verlaufen. Die Ketten 24 und 25 sind mit Mitnehmern 31 versehen, die ebenfalls mit den Aufnahmewinkeln 21 zusammenarbeiten.

Im Bereich der Eingabestation ist ein Förderband 32 vorgesehen, welches senkrecht zur eingangsseitigen Stirnseite des Speichers 1 angeordnet sein kann. Das Förderband 32 kann aber auch parallel zur eingangsseitigen Stirnseite des Speichers 1 angeordnet sein. Auf ihn gelangen die Warenstücke 10 in getakteter Förderung aus der Herstellungsmaschine zum Eingang des Speichers. Dem Förderband 32 ist ein Eingabeschieber 33 zugeordnet, der gemäß Pfeil 34 hin- und hergehend angetrieben wird, um so die Warenstücke 10, meist reihenweise, auf die zugehörige leere Trägerplatte 11 an der Gondel 12 zu schieben. Das Förderband 32 ist, wie durch gestrichelte Linienführung angedeutet, um seine dem Speicher 1 abgekehrte Umlenkwalze schwenkbar angeordnet, so daß sein freies, dem Speicher zugekehrtes Ende 35 höhenveränderlich verfahrbar ist. Statt der Schwenkbarkeit des Förderbandes 32 könnte auch ein insgesamt parallel zu sich selbst höhenverfahrbares Förderband vorgesehen sein. Damit wird es in beiden Fällen möglich, den Gondelsprung, also den Abstand zwischen der untersten Trägerplatte 11 einer vorangehenden Gondel 12 zu der obersten Trägerplatte 11 einer nachfolgenden Gondel 12 zu überbrücken. Hierzu wird das Förderband 32 in kleinen Schritten entsprechend der Anzahl der Trägerplatten 11 an der Gondel 12 während der Befüllung einer Gondel aufwärts verschwenkt. Während des Gondelsprungs erfolgt eine Abwärtsverschwenkung entsprechend der Summe der einzelnen Schritte beim Aufwärtsschwenken. Damit ist es möglich, die kontinuierlich und ohne Unterbrechung auf dem Förderband 32 in Reihen ankommenden Warenstücke 10 ununterbrochen getaktet auf die Trägerplatten 11 der Gondeln 12 zu schieben. Dieses Überschieben kann sogar während der Bewegung des Förderers 4 erfolgen, indem das vordere freie Ende 35 des Förderbandes 32 für eine geringe Zeitspanne, wie es für den Überschiebevorgang erforderlich ist, in Richtung des Pfeiles 7 mitläuft. Wenn das Förderband 32 in der in Figur 1 dargestellten Relativlage zur Eingabestation 2 vorgesehen ist, kann auch auf den Eingabeschieber 33 verzichtet werden und die Übergabe der Warenstücke 10 über eine Bandmesserkante erfolgen.

Im Bereich der Ausgabestation 3 ist ein Ausgabeschieber 36, der die Warenstücke 10 gemäß Pfeil 37 von den Trägerplatten 11 auf einen Förderer 38 schiebt, von wo aus sie einer Packmaschine oder einer Packanlage zugeführt werden.

Im unteren Bereich des Speichers ist das rückwärtige Trum dargestellt, welches zur Förderung und Handhabung der leeren Gondeln 12 mit ihren Trägerplatten 11 dient. Es ist hier wiederum eine Förder- und Speicherstrecke 39 für leere Gondeln 12 vorgesehen. Auch hier sind Gleitschienen 40 rechts und links der Gondeln 12 angeordnet, auf denen die Gondeln 12, jeweils auf den Rollenpaaren 23 hängend, schrittweise gefördert werden. Im Bereich der Gleitschienen 40 ist eine nicht dargestellte Schleuse eingebaut, um an dieser Stelle leere Gondeln 12 zu Reinigungszwecken aus dem Kreislauf entnehmen bzw. in den Kreislauf zurückführen zu können.

Der Förderer 4 weist zwischen den Umlenkrädern 17 und 18 einen geneigt ansteigenden Bereich 41 auf, der dazu dient, die Mitnehmer 19 an den Ketten 13 und 14 von einer Position unterhalb der Aufnahmewinkel 21 aus in diese einzufahren und die Gondeln 12 damit von den Gleitschienen 40 abzuheben. Zwischen den Umlenkrädern 15 und 16 ist ein Bereich gebildet, in welchem die Gondeln 12 mit ihren Rollenpaaren 22 auf den Gleitschienen 9 aufsetzen, so daß die Mitnehmer 19 aus den Aufnahmewinkeln 21 herausgefahren werden. Dies kann auch durch einen ansteigenden Bereich der Gleitschiene 9 erfolgen.

Der Förderer 5 besitzt zwischen den Umlenkrädern 26 und 27 einen ansteigenden Bereich 42, in welchem die Mitnehmer 31 in die Aufnahmewinkel 21 am Ende der Speicherstrecke 6 einfahren. Zwischen den Umlenkrädern 29 und 30 ist ein abfallender Bereich 43 gebildet. Hier findet die Übergabe der Gondeln 12 an die Gleitschienen 40 statt.

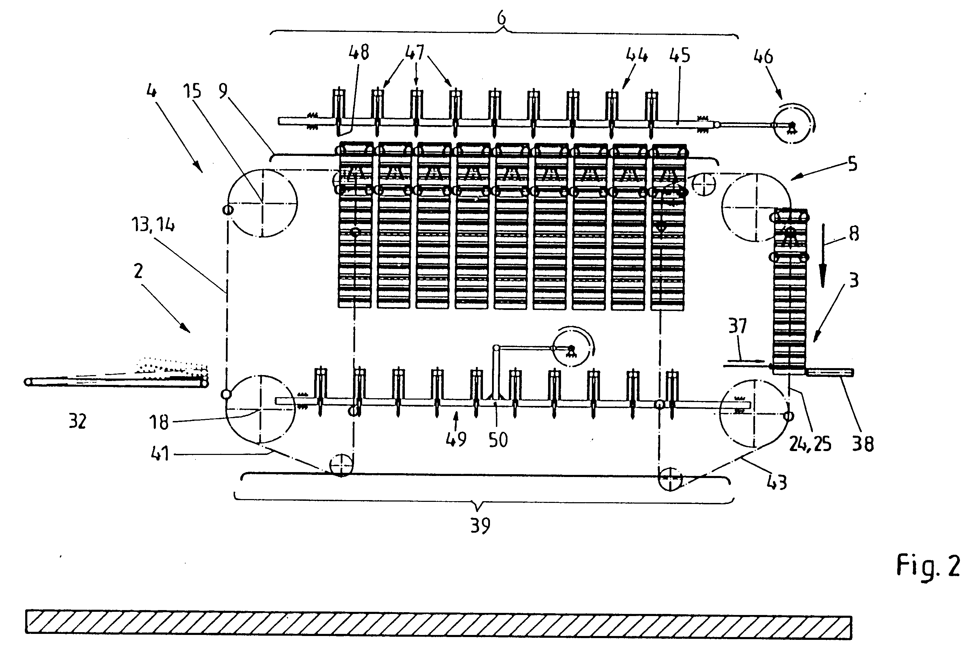

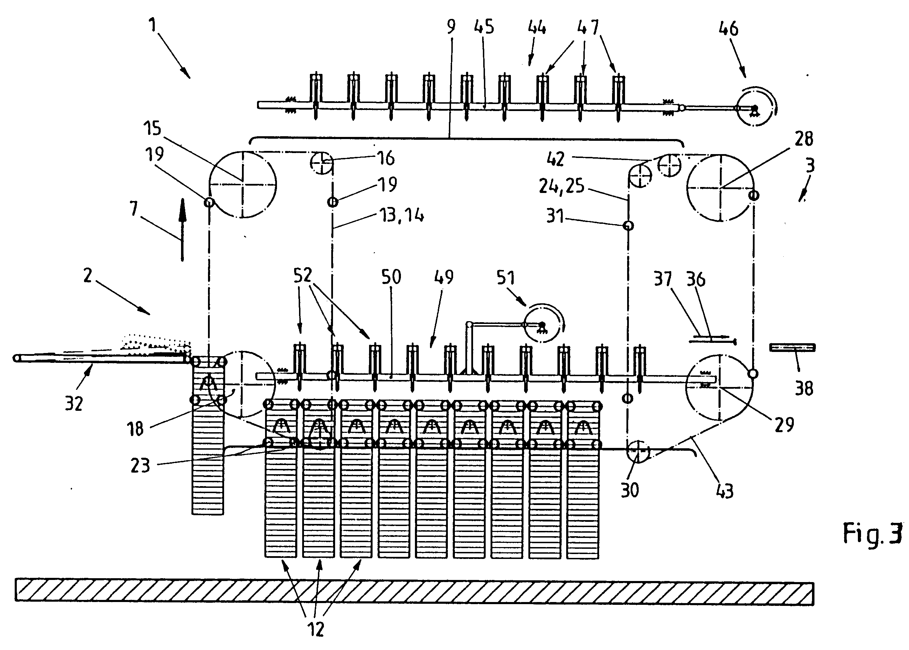

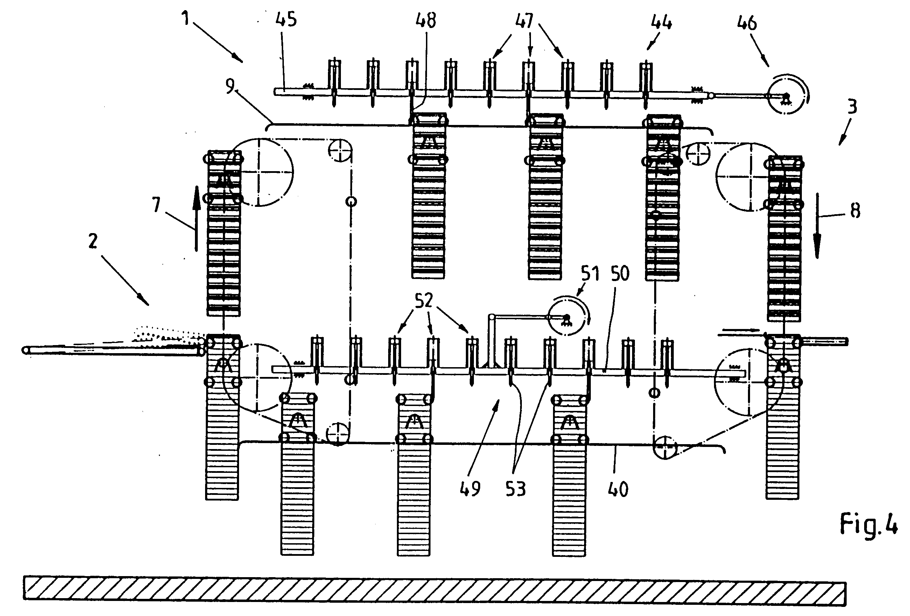

Für die Bewegung der befüllten Gondeln 12 innerhalb der Speicherstrecke 6 ist eine Fördereinrichtung 44 (Figur 2) vorgesehen, die eine Schiebestange 45 aufweist, die über einen Kurbelantrieb 46 hin- und hergehend angetrieben wird. Auf der Schiebestange 45 sind Pneumatikzylinder 47 in den Gondeln 12 entsprechenden Abständen vorgesehen, deren Kolbenstangen 48 je nach Erfordernis (Figur 4) ausfahrbar sind, um hinter einer Gondel 12 zu fassen und diese während einer Umdrehung des Kurbelantriebes 46 um einen Platz auf den Gleitschienen 9 weiterzuschieben. Damit wird eine Staubildung der Gondeln 12 vor dem Ende der Speicherstrecke 6 bzw. der Ausgabestation 3 erreicht, wie dies Figur 1 zeigt.

Auch im Bereich der Förder- und Speicherstrecke 39 für leere Gondeln 12 ist eine entsprechende Fördereinrichtung 49 vorgesehen. Eine Schiebestange 50 wird über einen Kurbelantrieb 51 hin- und hergehend angetrieben. Auch hier ist die Schiebestange 50 mit Pneumatikzylindern 52 besetzt, deren Kolbenstangen 53 je nach Bedarf ausfahrbar sind, um auch hier taktweise hinter die Gondeln 12 zu fassen und diese unter Staubildung gezielt auf den Gleitschienen 40 vorwärtszuschieben. Es versteht sich, daß über die Breite der Gondeln 12 jeweils zwei Pneumatikzylinder, Kolbenstangen bzw. Angriffspunkte gebildet sind, damit die Gondeln 12 mit ihrer vertikalen Längsmittelebene senkrecht zur Zeichenebene der Figuren 1 bis 4 geführt werden und so von den Gleitschienen 9, 40 nicht herabfallen können.

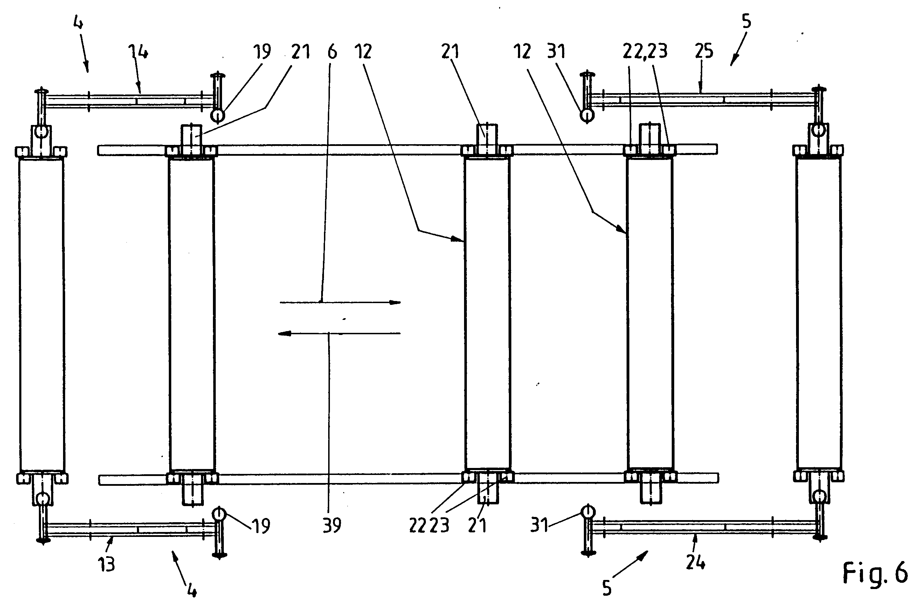

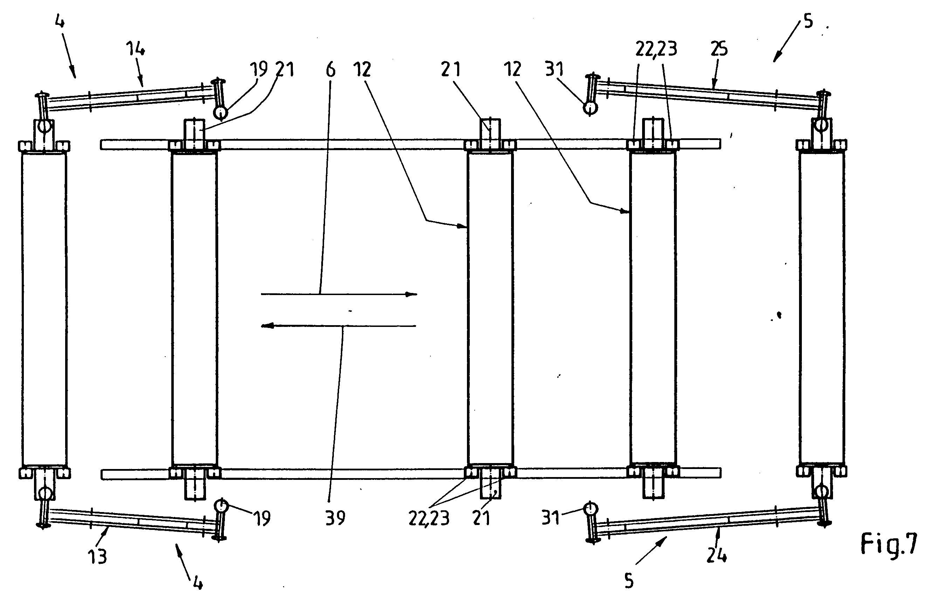

Die Figuren 6 und 7 zeigen zwei Ausführungsformen hinsichtlich der Relativanordnung der einzelnen Bestandteile der Förderer 4 und 5 relativ zu den Speicherstrecken 6 bzw. 39. Figur 6 verdeutlicht, daß die von den Ketten 13, 14, 24, 25 der Förderer 4 und 5 aufgespannten Förderebenen senkrecht zur Zeichenebene genau parallel zur Förderrichtung in den Speicherstrecken 6 und 39 verlaufen. Es ist hier erkennbar, daß die Mitnehmer 19 relativ zu den Förderebenen der Ketten 13 und 14 bewegt werden, um die Aufnahmewinkel 21 an den Gondeln 12 zu untergreifen bzw. loszulassen. Figur 7 verdeutlicht hingegen, daß auf eine solche Querbewegung der Mitnehmer 19 bzw. 31 verzichtet werden kann. Die Förderebenen der Ketten 13, 14, 24, 25 sind hier leicht schräg zu der Bewegungsrichtung in den Speicherstrecken 6 und 39 ausgebildet, so daß durch diese besondere Schräglage die Relativbewegung der Mitnehmer 19 und 31 ersetzt wird. In allen Fällen sind jedoch die Förderer 4 und 5 so angeordnet, daß sie zugleich die Funktion von Ein- bzw. Ausgabeelevatoren und Ein- und Ausgabeförderern für die Speicherstrecken 6 und 39 erfüllen. Es versteht sich, daß die Förderer 4 und 5 jeweils über einen einzelnen Antrieb verfügen, die unabhängig voneinander betätigbar sind. Ansonsten sind die Einzelantriebe der einzelnen Elemente aufeinander abgestimmt.

Der Speicher 1 wird wie folgt betrieben:
Leere Gondeln 12 werden gemäß Figur 3 von dem Förderer 4 erfaßt und über die Umlenkräder 18 gemäß Pfeil 7 schrittweise oder kontinuierlich aufwärts gefördert. Von dem Förderband 32 werden Reihen von Warenstücken 10 jeweils auf die Trägerplatten 11 überführt und dort aufgeschoben bzw. abgelegt. Ist eine Gondel 12 auf sämtlichen ihrer Trägerplatten 11 mit Warenstücken 10 befüllt, so gelangt die nächste Gondel 12 in den Bereich des Förderbandes 32 (Figur 4), und es erfolgt ohne Unterbrechung der Zufuhr der Warenstücke auf dem Förderband 32 die Befüllung der nächsten Gondel 12. Dabei wurde der Gondelsprung durch die Höhenverfahrbarkeit des freien Endes 35 des Förderbandes 32 überbrückt. Beim weiteren Befüllen der nachfolgenden Gondel wird die vorangehende Gondel über die Umlenkräder 15 aus einer vertikalen Förderrichtung in eine horizontale Förderrichtung umgelenkt und mit den Rollenpaaren 22 auf den Gleitschienen 9 der Speicherstrecke 6 abgesetzt. Die Mitnehmer 19 fahren aus den Aufnahmewinkeln 21 im Bereich der Umlenkräder 16 heraus. Die Gondel 12 bzw. die Gondeln 12 werden über die Fördereinrichtung 44 taktweise gemäß Figur 4 im Bereich der Speicherstrecke 6 weitergefördert. Hierzu steht ausreichend Zeit zur Verfügung, so daß die Fördereinrichtung 44 vergleichsweise langsam angetrieben werden kann. Die Gondeln 12 stauen sich am Ende der Speicherstrecke 6 auf, wie dies Figur 1 zeigt.

Die Ausgabe aus dem Speicher 1 ist anhand von Figur 2 erkennbar. Der Förderer 5 fährt mit den Mitnehmern 31 an den Ketten 24 und 25 im Bereich 42 in die Aufnahmewinkel 21 der vordersten Gondel der Speicherstrecke 6 ein, nimmt diese Gondel 12 auf und führt sie gemäß Pfeil 8 abwärts. Während dieser Zeit wird die Fördereinrichtung 44 um einen Takt weiterbewegt, so daß die Gondeln 12 wiederum bis zum Ende der Speicherstrecke 6 aufrücken. Der Förderer 5 kann taktweise bewegt werden, wobei durch abgestimmte taktweise Bewegung des Ausgabeschiebers 36 gemäß Pfeil 37 die einzelnen Warenstücke 10 bzw. Reihen von Warenstücken 10 auf den Förderer 38 ausgeschoben werden. Eine vollständig entleerte Gondel 12 wird dann im Bereich 43 durch den Förderer 5 auf die Gleitschienen 40 der Förder- und Speicherstrecke 39 im unteren Trum abgesetzt. Hier wird die Fördereinrichtung 49 entsprechend der Fördereinrichtung 44 betätigt, so daß sich auch hier die leeren Gondeln vor dem Ende der Speicherstrecke 39 aufstauen, wie dies Figur 3 erkennen läßt.

## Patentansprüche

1. Speicher für Warenstücke, insbesondere reihenweise geförderte Süßwarenstücke, mit einer Eingabestation (2) und einer Ausgabestation (3), die unabhängig voneinander betätigbar sind, mit einer zwischen Eingabestation (2) und Ausgabestation (3) angeordneten Speicherstrecke (6) und einer Förder- und Speicherstrecke (39), je mit variabler Aufnahmekapazität, mit Trägerplatten (11) zur Aufnahme der Warenstücke (10) und je einer Fördereinrichtung zum Transportieren der Trägerplatten (11) durch die Speicherstrecke (6) und die Förder- und Speicherstrecke (39) und mit einem im Bereich der Eingabestation (2) vorgesehenen Eingabeelevator zum Bilden und einem im Bereich der Ausgabestation (3) vorgesehenen Ausgabeelevator zum Abarbeiten von Stapeln, wobei die Speicherstrecke (6) zwischen Eingabeelevator und Ausgabeeelevator zum gemeinsamen Fördern der Stapel unter Staubildung vor dem der Ausgabestation (3) zugeordneten Ausgabeelevator ausgebildet ist, wobei die je einen Stapel bildenden Trägerplatten (11) an Gondeln (12) zusammengefasst sind, **dadurch gekennzeichnet**, daß der Eingabeelevator und der Ausgabeelevator je ein eine vertikale und zwei horizontale Bewegungskomponenten für die Gondeln (12) bereitstellender und mit Mitnehmern (19, 31) für die Gondeln (12) besetzter Förderer (4, 5) ist, daß jeder Förderer (4, 5) zwei Ketten (13, 14; 24, 25) aufweist und daß jede Kette (13, 14; 24, 25) jedes Förderers (4, 5) über mindestens vier ortsfeste Umlenkräder (15, 16, 17, 18; 26, 27, 28, 29, 30) in einer zumindest etwa parallel zur Bewegungsrichtung (20) der Gondeln (12) in der Speicherstrecke (6) und der Förder- und Speicherstrecke (39) gebildeten Förderebene umlaufend geführt ist, durch deren Anordnung die Förderebene festgelegt ist.

2. Speicher nach Anspruch 1, **dadurch gekennzeichnet**, daß das dem Speicher (1) zugekehrte freie Ende (35) eines die Warenstücke (10) heranführenden Förderbandes (32) und/oder eines die Warenstücke aus den Speicher (1) hinwegführenden Förderers (38) zur Überbrückung des Gondelsprungs höhenveränderlich verfahrbar ist.

3. Speicher nach Anspruch 1, **dadurch gekennzeichnet**, daß die Trägerplatten (11) an den Gondeln (12) in einem dem halben Gondelsprung entsprechenden Abstand voneinander angeordnet sind.

4. Speicher nach Anspruch 1, **dadurch gekennzeichnet**, daß die Speicherstrecke (6) für die mit Warenstücken (10) gefüllten Gondeln (12) und eine zwischen Ausgabestation (3) und Eingabestation (2) vorgesehene Speicherstrecke (39) für leere Gondeln (12) mit Gleitschienen (9, 40) für die Gondeln ausgestattet sind, auf denen die Gondeln (12) hängend aufgenommen sind.

5. Speicher nach Anspruch 1 und 2, **dadurch gekennzeichnet**, daß in der Speicherstrecke (39) für leere Gondeln (12) eine Schleuse zu Herausnehmen und Einführen von Gondeln (12) vorgesehen ist.

6. Speicher nach Anspruch 1, **dadurch gekennzeichnet**, daß jeder Förderer (4, 5) einen geneigten ansteigenden und abfallenden Bereich (41, 42, 43) der horizontalen Bewegungskomponente zur Aufnahme bzw. Abgabe der Gondeln (12) aufweist.

7. Speicher nach Anspruch 1 oder 6, **dadurch gekennzeichnet**, daß jede Gondel (12) zwei im vertikalen Abstand zueinander angeordnete Rollenpaare (22, 23) aufweist, zwischen denen ein Aufnahmewinkel (21) für den Eingriff des Mitnehmers (19, 31) angeordnet ist.

8. Speicher nach Anspruch 1 oder 3, **dadurch gekennzeichnet**, daß die Förderer (4, 5) mit ihren Förderebenen gegenüber der Bewegungsebene in der Speicherstrecke (6, 39) um das für das Ein- bzw. Ausfahren der Mitnehmer (19, 31) in die Aufnahmewinkel (21) der Gondeln (12) erforderliche Maß schrägstehend angeordnet sind.

## Claims

1. A store for individual products, in particular edible sweet goods conveyed in rows, having an input station (2) and an output station (3) each being actuated independently of the other, a storage line (6), arranged between the input and the output station, and a conveying and storage line (39), each having variable receiving capacity and carrier plates (11) for receiving the individual products (10) as well as a conveying facility for transporting the carrier plates (11) in a roughly circular motion through the storage line (6) and the conveying and storage line (39) each, and an input elevator for building up full stacks located in the area of the input station (2) and an output elevator for working through full stacks located in the area of the output station (3), whereby the storage line (6) between input elevator and output elevator is adapted for the common conveying motion of the stacks with congestion in front of the output elevator allocated to the output station (3), whereby the carrier plates (11) forming a full stack are supported on a gondola (12) each, **characterized** in that a conveyor (4, 5) is provided each as an input elevator and as an output elevator and each conveyor offers one vertical and two horizontal motions of the gondolas (12) and comprises carrier lugs (19, 31) for the gondolas (12), that each conveyor (4, 5) comprises two chains (13, 14; 24, 25) and that each chain (13, 14; 24, 25) of each conveyor (4, 5) is circulatory guided via at least four deflection rollers (15, 16, 17, 18; 26, 27, 28, 29, 30) being fixly arranged and located in a conveying plane which at least is about parallel to the direction of motion (20) of the gondolas (12) in the storage line (6) and in the conveying and storage line (39).

2. The store of claim 1, **wherein** the free end (35) of the conveyor (32) feeding the individual products to the store (1) and facing the store (1) and/or of a conveyor (38) carrying away the individual products from the store (1) is displaceably arranged in vertical direction for the purposes of bridging the gap between succeeding gondolas.

3. The store of claim 1, **wherein** the carrier plates (11) are located on the gondolas (12) in a distance to each other in the amount of the half value of the gap between succeeding gondolas.

4. The store of claim 1, **wherein** the storage line (6) for the gondolas (12) filled with individual products (10) and the storage line (39) for empty gondolas (12) located between the output station (3) and the input station (2) are equipped with sliderails (9, 40), on which the gondolas (12) are supported in hanging condition.

5. The store of claim 1 and 2, **wherein** a sluice is provided in the conveying and storage line (39) for empty gondolas (12) to take out empty gondolas (12) and to reintroduce them into the cycle.

6. The store of claim 1, **wherein** each conveyor (4, 5) comprises portions (41, 42, 43) inclined upwards and downwards to pick up and to put down the gondolas (12).

7. The store of claim 1 or 6, **wherein** each gondola (12) comprises two pairs of rollers (22, 23) located with vertical distance to each other and take up elements (21) located between the pairs of rollers and for the contact of the carrier lugs (19, 31).

8. The store of claim 1 or 3, **wherein** the conveyors (4, 5) are located with their conveying planes in an inclined manner with respect to plane of motion in the storage lines (6, 39) and in an amount sufficient for coming into or out of contact of the carrier lugs (19, 31) and the take up elements (21) on the gondolas (12).

## Revendications

1. Accumulateur pour des articles, en particulier des articles de confiserie transportés en rangées, comportant un poste d'introduction (2) et un poste d'extraction (3) qui peuvent être manoeuvrés indépendamment l'un de l'autre, une voie d'accumulation (6), disposée entre le poste d'introduction (2) et le poste d'extraction (3), et une voie de transport et d'accumulation (39), qui ont chacune une capacité d'accueil variable, des plaques de support (11) destinées à recevoir les articles (10) et des dispositifs d'avancement respectifs destinés à assurer l'acheminement des plaques de support (11) à travers la voie d'accumulation (6) et à travers la voie de transport et d'accumulation (39), ainsi qu'un élévateur d'introduction prévu dans la région du poste d'introduction (2) pour former des empilages et un élévateur d'extraction prévu dans la région du poste d'extraction (3) pour défaire des empilages, la voie d'accumulation (6) étant aménagée entre l'élévateur d'introduction et l'élévateur d'extraction pour faire avancer conjointement les empilages avec formation d'une retenue devant l'élévateur d'extraction associé au poste d'extraction (3), les plaques de support (11) qui forment chacun des empilages étant regroupées sur des nacelles respectives (12), caractérisé en ce que l'élévateur d'introduction et l'élévateur d'extraction consistent chacun en un transporteur (4, 5) qui établit une composante de déplacement verticale et deux composantes de déplacement horizontales pour les nacelles (12) et qui est muni de tocs d'entraînement (19, 31) pour les nacelles (12), en ce que chaque transporteur (4, 5) comporte deux chaînes (13, 14; 24, 25) et en ce que chaque chaîne (13, 14; 24, 25) de chaque transporteur (4, 5) est amenée à circuler dans un plan de circulation défini parallèlement, au moins de façon approximative, à la direction de déplacement (20) des nacelles (12) dans la voie d'accumulation (6) et la voie de transport et d'accumulation (39), en étant guidée par l'intermédiaire d'au moins quatre roues de renvoi (15, 16, 17, 18; 26, 27, 28, 29, 30) placées dans des positions fixes, dont la disposition détermine le plan de circulation.

2. Accumulateur selon la revendication 1, caractérisé en ce que l'extrémité libre (35), tournée vers l'accumulateur (1), d'une bande transporteuse (32) amenant les articles (10) à ce dernier et/ou d'un transporteur (38) éloignant les articles de l'accumulateur (1) est déplaçable dans le sens de la hauteur en vue du franchissement de l'intervalle entre nacelles.

3. Accumulateur selon la revendication 1, caractérisé en ce que les plaques de support (11) sont, sur les nacelles (12), disposées à une distance l'une de l'autre, qui correspond à la moitié de l'intervalle entre nacelles.

4. Accumulateur selon la revendication 1, caractérisé en ce que la voie d'accumulation (6), pour les nacelles (12) remplies d'articles (10), et une voie d'accumulation (39) pour les nacelles vides (12), prévue entre le poste d'extraction (3) et le poste d'introduction (2), sont pourvues de glissières (9, 40) pour les nacelles, glissières sur lesquelles les nacelles (12) sont reçues en y étant suspendues.

5. Accumulateur selon les revendications 1 et 2, caractérisé en ce qu'un sas permettant de retirer et de mettre en place des nacelles (12) est prévu dans la voie d'accumulation (39) pour les nacelles vides (12).

6. Accumulateur selon la revendication 1, caractérisé en ce que chaque transporteur (4, 5) présente, sur sa composante de déplacement horizontale, une partie inclinée montante et descendante (41, 42, 43), pour respectivement prendre et relâcher les nacelles (12).

7. Accumulateur selon la revendication 1 ou 6, caractérisé en ce que chaque nacelle (12) comporte deux paires de galets (22, 23) qui sont disposées à distance l'une de l'autre en direction verticale et entre lesquelles est disposé un réceptacle en forme de cornière (21) pour l'accrochage du toc d'entraînement (19, 31).

8. Accumulateur selon la revendication 1 ou 3, caractérisé en ce que les transporteurs (4, 5) ont leurs plans de circulation disposés obliquement par rapport au plan de déplacement dans la voie d'accumulation (6, 39), suivant le degré qui convient pour permettre aux tocs d'entraînement (19, 31) de pénétrer dans les réceptacles en forme de cornière (21) des nacelles (12) et d'en sortir.
